# EUROPÄISCHE PATENTANMELDUNG

(11) **EP 2 311 910 A1**
(43) Veröffentlichungstag der Anmeldung: **20.04.2011**
(21) Anmeldenummer: 09013136.8
(22) Anmeldetag: 17.10.2009
(51) Int. Cl.: C08L 65/00, H01B 1/12

(54) **Verfahren zur Herstellung einer elektrisch leitfähigen Zusammensetzung**

(71) Anmelder: Bayer MaterialScience AG, 51368 Leverkusen (DE)
(72) Erfinder: Cochet, Ayse, 51067 Köln (DE); Wagner, Joachim, Dr., 51061 Köln (DE); Jenninger, Werner, Dr., 50677 Köln (DE); Schapeler, Dirk, 50171 Kerpen (DE)

(57) **Zusammenfassung**

Ein Verfahren zur Herstellung einer elektrisch leitfähigen Zusammensetzung umfasst den Schritt der Polymerisation eines Thiophens der allgemeinen Formel (I) 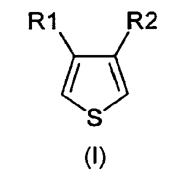 wobei gilt: R1 und R2 sind unabhängig voneinander Wasserstoff, Alkyl, Aryl, Alkoxy, Aryloxy oder aber R1 und R2 bilden gemeinsam eine unsubstituierte oder substituierte Alkylendioxy-Gruppe; in Gegenwart eines polymeren Polyols und in Abwesenheit eine Polyisocyanats. Gegenstand der Erfindung ist weiterhin eine hieraus erhältliche elektrisch leitfähige Zusammensetzung und einen Schichtenverbund, umfassend eine solche Zusammensetzung.

## Beschreibung

Die vorliegende Erfindung betrifft ein Verfahren zur Herstellung einer elektrisch leitfähigen Zusammensetzung. Sie betrifft weiterhin eine hieraus erhältliche elektrisch leitfähige Zusammensetzung und einen Schichtenverbund, umfassend eine solche Zusammensetzung.

Die Verbindungsklasse der π-konjugierten Polymere war in den letzten Jahrzehnten der Gegenstand zahlreicher Veröffentlichungen. Sie werden auch als leitfähige Polymere oder als synthetische Metalle bezeichnet.

Wegen der Delokalisierung der π-Elektronen entlang der Hauptkette zeigen diese Polymere interessante (nichtlineare) optische Eigenschaften. Nach Oxidation oder Reduktion stellen sie elektrische Leiter dar. Beispiele für bekannte π-konjugierte Polymere sind Polypyrrole, Polythiophene, Polyaniline, Polyacetylene, Polyphenylene und Poly-(para-phenylen-vinylene). Ein besonders wichtiges und technisch genutztes Polythiophen ist das Poly-(3,4-ethylendioxythiophen), welches auch als PEDOT oder PEDT abgekürzt wird. Dieses Polymer weist nach Dotierung oder Oxidation eine bemerkenswerte elektrische Leitfähigkeit auf. Die Verarbeitbarkeit von PEDOT wird zum Beispiel durch die Verwendung von Polystyrolsulfonat als Gegenion in wässriger Dispersion erreicht. Die Chemie des PEDOT wird unter anderem in einem Übersichtsartikel von L. Groenendaal et al., Adv. Mater. 2000, 12, 481-494 erläutert.

Zur Herstellung von dielektrischen elastomeren Aktoren wird üblicherweise eine Folie eines dielektrischen Elastomers, welches ein Isolator ist, beidseitig mit Elektroden versehen. Das dielektrische Elastomer kann beispielsweise Polyurethan sein. Hierbei ist es günstig, wenn die Elektroden in Form einer Beschichtung auf dem Elastomer aufgetragen werden. Dieses bedingt gewisse Eigenschaften des Elektrodenmaterials, insbesondere eine ausreichende Elastizität, ohne die elektrische Leitfähigkeit zu verlieren und weiterhin die Möglichkeit, die Elektrode als Schicht auftragen zu können.

Dehnbare elektrisch leitfähige Materialien auf der Basis von PEDOT und Polyurethanelastomeren werden beispielsweise in der Veröffentlichung von N. B. Larsen et al., Adv. Funct. Mater. 2007, 17, 3069-3073 beschrieben. Hierbei wird jedoch ein Polymerblend aus PEDOT:p-Tosylat und einem aliphatischen Polyurethanelastomer verwendet. Zur Herstellung wird EDOT in einer Lösung des Polyurethans in Tetrahydrofuran polymerisiert. Anschließend wird die Zusammensetzung auf ein Substrat aufgetragen und das Lösungsmittel wird verdampft. Nachteilig an diesem Verfahren ist insbesondere aus Kostengesichtspunkten, dass ein Polyurethanpolymer als Matrix verwendet werden muss. Weiterhin könnten die benötigten Lösungsmittel, in diesem Fall Tetrahydrofuran, nicht mit allen Substratoberflächen kompatibel sein.

Ein in WO 2008/064878 vorgeschlagenes Verfahren betrifft ein Verfahren zur Herstellung eines elektrochromen Materials auf der Basis von hydroxymethylsubstituiertem EDOT oder Hydroxypropylendioxythiophen. Hervorgehoben wird hierbei die Adhäsion zu Substraten. Allerdings ist eine umfangreiche Folgechemie nötig, um geeignete Oberflächen mit dem gewünschten Material zu beschichten.

Es besteht folglich weiterhin der Bedarf an elektrisch leitfähigen Zusammensetzungen auf der Basis von Thiophenen, welche sich einfach herstellen lassen und zur Beschichtung von Oberflächen geeignet sind. Wünschenswert wäre weiterhin, dass Nebenreaktionen der Thiophene mit Reaktionskomponenten vermieden werden.

Erfindungsgemäß vorgeschlagen wird ein Verfahren zur Herstellung einer elektrisch leitfähigen Zusammensetzung, umfassend den Schritt der Polymerisation eines Thiophens der allgemeinen Formel (I) 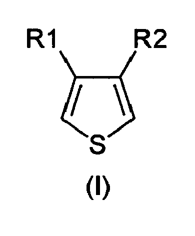 wobei gilt: R1 und R2 sind unabhängig voneinander Wasserstoff, Alkyl, Aryl, Alkoxy, Aryloxy oder aber R1 und R2 bilden gemeinsam eine unsubstituierte oder substituierte Alkylendioxy-Gruppe;
in Gegenwart eines polymeren Polyols und in Abwesenheit eine Polyisocyanats.

Das erfindungsgemäße Verfahren liefert elektrisch leitfähige Zusammensetzungen. Überraschenderweise wurde gefunden, dass im Fall des kommerziell wichtigen EDOT die elektrische Leitfähigkeit des Materials sogar höher sein kann als die des reinen PEDOT.

"Elektrisch leitfähig" bedeutet hierbei zunächst, dass die Zusammensetzung kein Isolator ist. Typischerweise werden als Isolatoren Substanzen bezeichnet, welche eine elektrische Leitfähigkeit von weniger als 10⁻⁸ S/m aufweisen. Insbesondere sind elektrisch leitfähige Zusammensetzungen solche mit einer elektrischen Leitfähigkeit von mehr als 1 S/cm.

Im erfmdungsgemäßen Verfahren werden Thiophene der allgemeinen Formel (I) polymerisiert. Eine Möglichkeit der Polymerisation ist die säurekatalysierte Polymerisation unter Einsatz von Brönstedt- und/oder Lewis-Säuren. Bei der Polymerisation der Thiophene (I) können benzoide und/oder chinoide Strukturen in der Polymerkette erhalten werden.

Der Begriff "Alkyl" umfasst allgemein im Zusammenhang der gesamten Erfindung Substituenten aus der Gruppe n-Alkyl wie Methyl, Ethyl oder Propyl, verzweigtes Alkyl und/oder Cycloalkyl. Der Begriff "Aryl" umfasst allgemein im Zusammenhang der gesamten Erfindung Substituenten aus der Gruppe einkernige Carbo- oder Heteroarylsubstituenten wie Phenyl und/oder mehrkernige Carbo- oder Heteroarylsubstituenten. Analoges gilt für die Begriffe "Alkoxy" und "Aryloxy".

Weiterhin können R1 und R2 gemeinsam eine unsubstituierte oder substituierte Alkylendioxygruppe bilden. Beispiele für unsubstituierte Alkylendioxy-Gruppen -Q-[CH₂]ₙ-O-sind Methylendioxy (-O-[CH₂]-O-), Ethylendioxy (-O-[CH₂]₂-O-), Propylendioxy (-O-[CH₂]₃O-) und Butylendioxy (-O-[CH₂]₄-O-). In substituierten Alkylendioxy-Gruppen befinden sich an den [CH₂]ₙ-Gruppen weitere Substituenten. Beispielsweise kann jedes Kohlenstoffatom einer Ethylendioxy-Gruppe einen Methylsubstituenten tragen (-O-[CH(CH₃)₂]₂-O-). Weitere Substituenten für Alkylendioxygruppen können unter anderem Hydroxy- und Hydroxymethylgruppen sein.

Erfindungsgemäß ist vorgesehen, dass die Polymerisation des Thiophens (I) in Gegenwart eines polymeren Polyols stattfindet. Solche Polyole können beispielsweise eine zahlenmittlere Molekülmasse von ≥ 300 g/mol bis ≤ 10000 g/mol aufweisen. Beispiele für Polyole sind Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und Polyesterpolycarbonatpolyole. Diese können einzeln oder in beliebigen Mischungen untereinander eingesetzt werden. Besonders bevorzugt ist ein lineares Polyetherpolyol auf der Basis von Propylenoxid mit einer Molekülmasse von ≥3000 g/mol bis ≤5000 g/mol und einer OH-Zahl gemäß DIN 53240 von ≥26,5 mg KOH/g bis ≤30 mg KOH/g.

Weiterhin ist erfindungsgemäß vorgesehen, dass die Polymerisation des Thiophens (I) in Abwesenheit eines Polyisocyanats stattfindet. Hierunter ist zu verstehen, dass in der Reaktionsmischung keine Polyisocyanate wie MDI, TDI, HDI und dergleichen vorhanden sind. Daher handelt es sich beim erfmdungsgemäßen Verfahren gerade nicht um eine Polyurethanherstellung, bei der noch Thiophene zugegen sind und auch polymerisiert werden sollen. Vielmehr wurde bei eigenen Versuchen gefunden, dass in der Gegenwart von Polyisocyanaten unerwünschte Nebenreaktionen von Thiophenen und/oder deren Polymeren auftreten. Eine Abwesenheit von Polyisocyanaten liegt auch in dem Fall vor, dass das erfindungsgemäße Verfahren in Gegenwart eines fertigen Polyurethans, insbesondere auf einer Polyurethanoberfläche durchgeführt wird, auch wenn noch technisch unvermeidliche Spuren von Polyisocyanat im Polyurethanpolymer vorliegen.

Geeignete Reaktionstemperaturen können beispielsweise in einem Bereich von ≥50 °C bis ≤100 °C oder vorzugsweise von ≥ 70 °C bis ≤ 90 °C liegen. Weiterhin ist es möglich, das erfindungsgemäße Verfahren ohne zusätzliches Lösungsmittel durchzuführen, wobei unvermeidliche Lösungsmittelanteile durch Katalysatorzubereitungen und dergleichen in dem Begriff "ohne zusätzliches Lösungsmittel" mit eingeschlossen sind.

Das erhaltene Polythiophen kann durch zumindest teilweise Oxidation in den elektrisch leitfähigen Zustand überführt werden. Es ist ebenfalls möglich, dass dieser Zustand bereits durch die Wahl der Reaktionsbedingungen erreicht wird. Dieses geschieht beispielsweise dadurch, dass die Polymerisation in Gegenwart eines Oxidationsmittels durchgeführt wird. Geeignete Oxidationsmittel sind unter anderem Tetrachloro-para-benzochinon, Tetrabromo-para-benzochinon, Tetracyanoethylen, Tetracyanochinodimethan, Triphenylmethylhexafluoroarsenat, Triphenylmethylhexafluoroantimonat und/oder Iod.

Günstigerweise liegt das Thiophen (I) im molaren Überschuss relativ zum Polyol vor. In einer Ausführungsform des Verfahrens beträgt das molare Verhältnis von Thiophen (I) zu Polyol ≥5:1 bis ≤15:1. Dieses Verhältnis kann auch ≥7:1 bis ≤13:1 oder vorzugsweise ≥9:1 bis ≤ 11:1 betragen. Der Vorteil solcher Überschüsse ist, dass in erfindungsgemäßen Zusammensetzungen die elektrische Leitfähigkeit steigt, wenn der Anteil des Polythiophens höher ist.

In einer weiteren Ausführungsform des Verfahrens wird die Polymerisation des Thiophens (I) in Gegenwart einer oxidierenden Lewis-Säure als Katalysator durchgeführt. Hierbei bedeutet der Begriff "oxidierend", dass die Lewis-Säure in der Lage ist, das erhaltene Polythiophen zumindest teilweise zu oxidieren. Beispiele für solche oxidierenden Lewis-Säuren sind Cer(IV)-Salze, Eisen(III)-Salze wie Eisen(III)-Chlorid und insbesondere Eisen(III)-Salze mit nicht nucleophilen Anionen wie Eisen(III)-p-Toluolsulfonat (Eisen(III)-Tosylat). Der Anteil der oxidierenden Lewis-Saure, bezogen auf das eingesetzte Thiophen (I), kann vorzugsweise in einem Bereich von ≥50 mol-% bis ≤300 mol-% und mehr bevorzugt von ≥100 mol-% bis ≤200 mol-% liegen.

In einer weiteren Ausführungsform des Verfahrens wird die Polymerisation des Thiophens (I) auf elektrochemischem Wege durchgeführt. Dieses kann insbesondere dadurch geschehen, dass die Zusammensetzung umfassend Thiophen (I) und Polyol in einem Reaktor mit den entsprechenden Elektroden polymerisiert wird. Der Vorteil einer elektrochemischen Polymerisation ist, dass weniger Fremdstoffe wie beispielsweise Katalysatoren eingesetzt werden müssen.

In einer weiteren Ausführungsform des Verfahrens ist das Polyol ein Polyetherpolyol mit Propylenoxideinheiten (-O-CH₂CH(CH₃)-). Solch ein Polyetherpolyol kann, ohne hierauf beschränkt zu sein, beispielsweise eine zahlenmittlere Molekülmasse von ≥2000 g/mol bis ≤4000 g/mol aufweisen.

In einer weiteren Ausführungsform des Verfahrens wird die Polymerisation des Thiophens (I) zumindest teilweise auf einem Trägermaterial durchgeführt. Dieses lässt sich so bewerkstelligen, dass die benötigten Reaktionskomponenten bei einer Temperatur gemischt werden, bei der die Polymerisation des Thiophens (I) noch nicht oder in einem die Verarbeitbarkeit nicht beeinträchtigendem Maße abläuft. Das Gemisch wird dann auf das Trägermaterial aufgetragen, beispielsweise mittels Siebdrucken, Tintenstrahldrucken, Aufrakeln, Eintauchen, Besprühen, Bestreichen oder Spin-Coating. Hierbei ist es möglich, dass Bereiche des Trägermaterials nicht mit dem Gemisch beschichtet werden, wodurch sich im Endergebnis Leiterbahnen erhalten lassen.

Nach dem Auftragen des Gemischs wird das beschichtete Trägermaterial dann auf eine Temperatur erhitzt, bei der die Polymerisation des Thiophens (I) abläuft oder beendet wird. Bevorzugt ist, dass das Trägermaterial in flexibler oder elastischer Form vorliegt. Beispiele für geeignete Trägermaterialien sind Polyurethane. Durch die Wahl geeigneter klebriger Polyurethane lässt sich eine gute Haftung der erfmdungsgemäß erhaltenen Zusammensetzung erreichen. Es ist ebenso möglich, dass das Trägermaterial zur besseren Haftung der Zusammensetzung mit einem Klebstoff beschichtet ist.

Die vorliegende Erfindung betrifft weiterhin eine gemäß dem erfindungsgemäßen Verfahren erhältliche Zusammensetzung. Insbesondere betrifft die Erfindung eine elektrisch leitfähige Zusammensetzung, umfassend ein Polymer mit Einheiten der allgemeinen Formel (II), (III), (IV) und/oder (V) 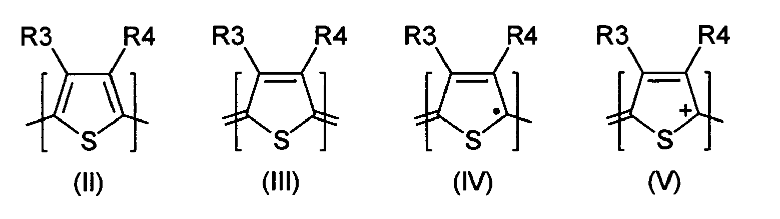 wobei gilt: R3 und R4 sind unabhängig voneinander Wasserstoff, Alkyl, Aryl, Hydroxyalkyl, Hydroxyalkyl, Alkoxy, Aryloxy oder aber R3 und R4 bilden gemeinsam eine unsubstituierte oder substituierte Alkylendioxy-Gruppe;
und ein polymeres Polyol sowie weiterhin nicht umfassend ein Polyisocyanat.

Hinsichtlich der Definitionen zur elektrischen Leitfähigkeit, zu den Substituenten, zu dem Polyol und zur Abwesenheit des Polyisocyanats wird zur Vermeidung von Wiederholungen auf die Ausführungen zum erfindungsgemäßen Verfahren verwiesen.

Die allgemeine Formel (II) stellt benzoide Struktureinheiten im Thiophenpolymer dar. Formeln (III) bis (V) stellen chinoide Struktureinheiten dar, wobei die Neutralform (III), die Radikalform (IV) und die kationische Form (V) aufgeführt sind. Diese Struktureinheiten können im Thiophenpolymer in beliebigen relativen Anteilen einschließlich eines relativen Anteils von Null nebeneinander vorliegen.

Die erfindungsgemäße Zusammensetzung kann beispielsweise in Form eines dehnfähigen, festen Materials vorliegen. Die Dehnung bis zum Verlust der elektrisch leitenden Eigenschaften kann zum Beispiel ≥50% bis ≤70% betragen.

In einer Ausführungsform der erfindungsgemäßen Zusammensetzung beträgt das molare Verhältnis von Einheiten (II), (III), (IV) und/oder (V) zu Polyol ≥5:1 bis ≤15:1. Dieses Verhältnis kann auch ≥7:1 bis ≤13:1 oder vorzugsweise ≥9:1 bis ≤11:1 betragen. Der Vorteil solcher Überschüsse ist, dass in erfindungsgemäßen Zusammensetzungen die elektrische Leitfähigkeit steigt, wenn der Anteil des Polythiophens höher ist.

In einer weiteren Ausführungsform der erfindungsgemäßen Zusammensetzung bilden in den Einheiten (II), (III), (IV) und/oder (V) R3 und R4 gemeinsam eine Ethylendioxy-Gruppe. Dann liegt ein polymeres Ethylendioxythiophen (PEDOT) vor. Es wurde speziell gefunden, dass diese Ausführungsform der erfindungsgemäßen Zusammensetzung eine höhere elektrische Leitfähigkeit als reines PEDOT zeigt.

In einer weiteren Ausführungsform der erfindungsgemäßen Zusammensetzung ist das Polyol ein Polyetherpolyol mit Propylenoxideinheiten (-O-CH₂CH(CH₃)-). Solch ein Polyetherpolyol kann, ohne hierauf beschränkt zu sein, beispielsweise eine zahlenmittlere Molekülmasse von ≥ 2000 g/mol bis ≤4000 g/mol aufweisen.

In einer weiteren Ausführungsform der erfindungsgemäßen Zusammensetzung weist diese einen Oberflächenwiderstand von ≥ 10 Ohm/Square bis ≤ 50 Ohm/Square auf. Der Oberflächenwiderstand lässt sich anhand der Norm ASTM D-257-99 bestimmen und kann auch in einem Bereich von ≥15 Ohm/Square bis ≤40 Ohm/Square liegen.

In einer weiteren Ausführungsform der erfindungsgemäßen Zusammensetzung weist diese eine spezifische Leitfähigkeit von ≥180 S/cm bis ≤300 S/cm auf. Die spezifische Leitfähigkeit lässt sich anhand der Norm ASTM D-257-99 bestimmen und kann auch in einem Bereich von ≥200 S/cm bis ≤280 S/cm liegen.

Ein weiterer Gegenstand der vorliegenden Erfindung ist ein Schichtenverbund, umfassend eine Trägerschicht und eine hierauf angeordnete Schicht umfassend eine erfindungsgemäße Zusammensetzung. Der Begriff "hierauf angeordnet" ist als vertikal übereinander angeordnet, aber nicht unbedingt als unmittelbar aufeinander liegend zu verstehen. Bevorzugt ist, dass das das Material der Trägerschicht in flexibler oder elastischer Form vorliegt. Beispiele für geeignete Materialien sind Polyurethane. Durch die Wahl geeigneter klebriger Polyurethane lässt sich eine gute Haftung der erfindungsgemäßen Zusammensetzung erreichen. Es ist ebenso möglich, dass die Trägerschicht zur besseren Haftung der Zusammensetzung mit einem Klebstoff beschichtet ist.

Die Schicht in dem Schichtenverbund, welche die erfindungsgemäße Zusammensetzung umfasst, kann beispielsweise in einer Dicke von ≥1 µm bis ≤1000 µm, vorzugsweise von ≥2 µm bis ≤100 µm und mehr bevorzugt von ≥3 µm bis ≤5 µm vorliegen. Sie kann durch Auflaminieren auf die Trägerschicht aufgetragen werden oder aber gemäß einer vorstehend beschriebenen Ausführungsform des erfindungsgemäßen Verfahrens auch so erhalten werden, dass die Polymerisation des Thiophens (I) zumindest teilweise auf der Trägerschicht durchgeführt wird.

In einer Ausführungsform des erfindungsgemäßen Schichtenverbundes umfasst die Trägerschicht Polyurethan. Vorzugsweise wird das Polyurethan erhalten aus einer, beispielsweise filmbildenden, Reaktionsmischung umfassend die folgenden Komponenten:
A) ein Polyisocyanat,
B) ein Polyisocyanat-Prepolymer
C) eine Verbindung mit mindestens zwei isocyanatreaktiven Hydroxygruppen.

Als Polyisocyanat und Komponente A) eignen sich beispielsweise 1,4-Butylendiisocyanat, 1,6 Hexamethylendiisocyanat (HDI), Isophorondiisocyanat (IPDI), 2,2,4 und/oder 2,4,4-Trimethylhexamethylendiisocyanat, die isomeren Bis-(4,4'-isocyanatocyclohexyl)methane oder deren Mischungen beliebigen Isomerengehalts, 1,4-Cyclohexylendiisocyanat, 4-Isocyanatomethyl-1,8-octandiisocyanat (Nonantriisocyanat), 1,4-Phenylendiisocyanat, 2,4- und/oder 2,6-Toluylendiisocyanat, 1,5-Naphthylendiisocyanat, 2,2'- und/oder 2,4'- und/oder 4,4'-Diphenylmethandiisocyanat, 1,3- und/oder 1,4-Bis-(2-isocyanato-prop-2-yl)-benzol (TMXDI), 1,3-Bis(isocyanatomethyl)benzol (XDI), Alkyl-2,6-diisocyanatohexanoate (Lysindiisocyanate) mit Alkylgruppen mit 1 bis 8 Kohlenstoffatomen sowie Mischungen davon. Weiterhin sind Uretdion-, Isocyanurat-, Biuret-, Iminooxadiazindion- oder Oxadiazintrionstruktur enthaltende Verbindungen basierend auf den genannten Diisocyanaten geeignete Bausteine der Komponente A).

In einer Ausführungsform kann die Komponente A) ein Polyisocyanat oder ein Polyisocyanatgemisch mit einer mittleren NCO-Funktionalität von 2 bis 4 mit ausschließlich aliphatisch oder cycloaliphatisch gebundenen Isocyanatgruppen sein. Bevorzugt handelt es sich um Polyisocyanate oder Polyisocyanatgemische der vorstehend genannten Art mit Uretdion-, Isocyanurat-, Biuret-, Iminooxadiazindion- oder Oxadiazintrionstruktur sowie Mischungen daraus und einer mittleren NCO-Funktionalität der Mischung von 2 bis 4, bevorzugt von 2 bis 2,6 und besonders bevorzugt von 2 bis 2,4.

Besonders bevorzugt können als Komponente A) Polyisocyanate auf der Basis von Hexamethylendiisocyanat, Isophorondiisocyanat oder die isomeren Bis-(4,4'-isocyanatocyclohexyl)methane sowie Mischungen der vorgenannten Diisocyanate eingesetzt werden.

Die als Komponente B) einsetzbaren Polyisocyanat-Prepolymere können durch Umsetzung von einem oder mehreren Diisocyanaten mit einem oder mehreren hydroxyfunktionellen, insbesondere polymeren, Polyolen gegebenenfalls unter Zusatz von Katalysatoren sowie Hilfs- und Zusatzstoffen erhalten werden. Des Weiteren können zusätzlich Komponenten zur Kettenverlängerung, wie beispielsweise mit primären und/oder sekundären Aminogruppen (NH₂-und/oder NH-funktionelle Komponenten) für die Bildung des Polyisocyanat-Prepolymers eingesetzt werden.

Das Polyisocyanat-Prepolymer als Komponente B) kann bevorzugt aus der Umsetzung von polymeren Polyolen und aliphatischen Diisocyanaten erhältlich sein. Bevorzugt sind dabei als Komponente B) Polyisocyanat-Prepolymere auf Basis von Polypropylenglykol als Polyol und Hexamethylendiisocyanat als aliphatischem Diisocyanat.

Hydroxyfunktionelle, polymere Polyole für die Umsetzung zum Polyisocyanat-Prepolymer B) können beispielsweise auch Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und/oder Polyesterpolycarbonatpolyole sein. Diese können zur Herstellung des Polyisocyanat-Prepolymers einzeln oder in beliebigen Mischungen untereinander eingesetzt werden.

Geeignete Polyesterpolyole zur Herstellung der Polyisocyanat-Prepolymere B) können Polykondensate aus Di- sowie gegebenenfalls Tri- und Tetraolen und Di- sowie gegebenenfalls Tri- und Tetracarbonsäuren oder Hydroxycarbonsäuren oder Lactonen sein. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind dabei Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester oder Mischungen davon, wobei Hexandiol(1,6) und Isomere, Butandiol(1,4), Neopentylglykol und Hydroxypivalinsäureneopentylglykolester bevorzugt sind. Daneben können auch Polyole wie Trimethylolpropan, Glycerin, Erythrit, Pentaerythrit, Trimethylolbenzol oder Trishydroxyethylisocyanurat oder Mischungen davon eingesetzt werden.

Als Dicarbonsäuren können dabei Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dimethylbemsteinsäure eingesetzt werden. Als Säurequelle können auch die entsprechenden Anhydride verwendet werden.

Sofern die mittlere Funktionalität des zu veresternden Polyols ≥2 ist, können zusätzlich auch Monocarbonsäuren, wie Benzoesäure und Hexancarbonsäure mit verwendet werden.

Bevorzugte Säuren sind aliphatische oder aromatische Säuren der vorstehend genannten Art. Besonders bevorzugt sind dabei Adipinsäure, Isophthalsäure und Phthalsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure oder Hydroxystearinsäure oder Mischungen davon. Geeignete Lactone sind Caprolacton, Butyrolacton oder Homologe oder Mischungen davon. Bevorzugt ist dabei Caprolacton.

Ebenfalls können zur Herstellung der Polyisocyanat-Prepolymere B) Hydroxylgruppen aufweisende Polycarbonate, beispielsweise Polycarbonatpolyole, bevorzugt Polycarbonatdiole, eingesetzt werden. Beispielsweise können diese ein zahlenmittleres Molekulargewichten Mₙ von 400 g/mol bis 8000 g/mol, bevorzugt von 600 g/mol bis 3000 g/mol eingesetzt werden. Diese können durch Reaktion von Kohlensäurederivaten, wie Diphenylcarbonat, Dimethylcarbonat oder Phosgen, mit Polyolen, bevorzugt Diolen, erhalten werden.

Beispiele hierfür geeigneter Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A oder lactonmodifizierte Diole der vorstehend genannten Art oder Mischungen davon.

Bevorzugt enthält die Diolkomponente dabei von 40 Gewichtsprozent bis 100 Gewichtsprozent Hexandiol, vorzugsweise 1,6-Hexandiol und/oder Hexandiolderivate. Solche Hexandiolderivate basieren auf Hexandiol und können neben endständigen OH-Gruppen Ester- oder Ethergruppen aufweisen. Derartige Derivate sind beispielsweise durch Reaktion von Hexandiol mit überschüssigem Caprolacton oder durch Veretherung von Hexandiol mit sich selbst zum Di- oder Trihexylenglykol erhältlich. Die Menge dieser und anderer Komponenten, werden im Rahmen der vorliegenden Erfindung in bekannter Weise derart gewählt, dass die Summe 100 Gewichtsprozent nicht überschreitet, insbesondere 100 Gewichtsprozent ergibt.

Hydroxylgruppen aufweisende Polycarbonate, insbesondere Polycarbonatpolyole, sind bevorzugt linear gebaut.

Ebenfalls können zur Herstellung der Polyisocyanat-Prepolymere B) Polyetherpolyole eingesetzt werden. Beispielsweise eignen sich Polytetramethylenglykolpolyether wie sie durch Polymerisation von Tetrahydrofuran mittels kationischer Ringöffnung erhältlich sind. Ebenfalls geeignete Polyetherpolyole können die Additionsprodukte von Styroloxid, Ethylenoxid, Propylenoxid, Butylenoxid und/oder Epichlorhydrin an di- oder polyfunktionelle Startermoleküle sein. Als geeignete Startermoleküle können beispielsweise Wasser, Butyldiglykol, Glycerin, Diethylenglykol, Trimethyolpropan, Propylenglykol, Sorbit, Ethylendiamin, Triethanolamin, oder 1,4-Butandiol oder Mischungen davon eingesetzt werden.

Bevorzugte Komponenten zur Herstellung der Polyisocyanat-Prepolymere B) sind Polypropylenglykol, Polytetramethylenglykolpolyether und Polycarbonatpolyole beziehungsweise deren Mischungen, wobei Polypropylenglykol besonders bevorzugt ist.

Dabei können polymere Polyole mit einem zahlenmittleren Molekulargewicht Mₙ von 400 g/mol bis 8000 g/mol, bevorzugt von 400 g/mol bis 6000 g/mol und besonders bevorzugt von 600 g/mol bis 3000 g/mol eingesetzt werden. Diese weisen bevorzugt eine OH-Funktionalität von 1,5 bis 6, besonders bevorzugt von 1,8 bis 3, ganz besonders bevorzugt von 1,9 bis 2,1 auf.

Neben den genannten polymeren Polyolen können auch kurzkettige Polyole bei der Herstellung der Polyisocyanat-Prepolymere B) eingesetzt werden. Beispielsweise kann Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), Trimethylolpropan, Trimethylolethan, Glycerin oder Pentaerythrit oder eine Mischung davon eingesetzt werden.

Geeignet sind auch Esterdiole des genannten Molekulargewichtsbereichs wie α-Hydroxybutyl-εhydroxy-capronsäureester, ω-Hydroxyhexyl-y hydroxybuttersäure-ester, Adipinsäure-(β-hydroxyethyl)ester oder Terephthalsäurebis(β-hydroxyethyl)-ester.

Ferner können zur Herstellung der Polyisocyanat-Prepolymere B) auch monofunktionelle isocyanatreaktive hydroxylgruppenhaltige Verbindungen eingesetzt werden. Beispiele solcher monofunktionellen Verbindungen sind Ethanol, n-Butanol, Ethylenglykolmonobutylether, Diethylenglykolmonomethylether, Diethylenglykolmonobutylether, Propylenglykolmonomethylether, Dipropylenglykol-monomethylether, Tripropylenglykolinonomethylether, Dipropylenglykolmono-propylether, Propylenglykolmonobutylether, Dipropylenglykolmonobutylether, Tripropylenglykolmonobutylether, 2-Ethylhexanol, 1-Octanol, 1-Dodecanol oder 1-Hexadecanol oder Mischungen davon.

Zur Herstellung der Polyisocyanat-Prepolymere B) können vorzugsweise Diisocyanate mit den Polyolen bei einem Verhältnis der Isocyanatgruppen zu Hydroxylgruppen (NCO/OH-Verhältnis) von 2:1 bis 20:1, beispielsweise von 8:1, umgesetzt werden. Dabei können Urethan- und/oder Allophanatstrukturen gebildet werden. Ein Anteil an nicht umgesetzten Polyisocyanaten kann anschließend abgetrennt werden. Hierfür kann beispielsweise eine Dünnschichtdestillation verwendet, wobei restmonomerenarme Produkte mit Restmonomergehalten von beispielsweise ≤1 Gewichtsprozent, bevorzugt ≤0,5 Gewichtsprozent, besonders bevorzugt ≤0,1 Gewichtsprozent, erhalten werden. Die Reaktionstemperatur kann dabei von 20 °C bis 120 °C, bevorzugt von 60 °C bis 100 °C, betragen. Gegebenenfalls können während der Herstellung Stabilisatoren wie Benzoylchlorid, Isophthaloylchlorid, Dibutylphosphat, 3-Chlorpropionsäure oder Methyltosylat zugesetzt werden.

Weiterhin können NH₂- und/oder NH-funktionelle Komponenten zusätzlich zur Kettenverlängerung bei der Herstellung der Polyisocyanat-Prepolymere B) eingesetzt werden.

Geeignete Komponenten zur Kettenverlängerung sind organische Di- oder Polyamine. Beispielsweise können Ethylendiamin, 1,2- Diaminopropan, 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, Diaminodicyclohexylmethan oder Dimethylethylendiamin oder Mischungen davon eingesetzt werden.

Darüber hinaus können auch Verbindungen, die neben einer primären Aminogruppe auch sekundäre Aminogruppen oder neben einer Aminogruppe (primär oder sekundär) auch OH-Gruppen aufweisen, zur Herstellung der Polyisocyanat-Prepolymere B) eingesetzt werden. Beispiele hierfür sind primäre/sekundäre Amine, wie Diethanolamin, 3-Amino-1-methylaminopropan, 3-Amino-1-ethylaminopropan, 3-Amino-1-cydohexylaminopropan, 3-Amino-1-methylaminobutan, Alkanolamine wie N-Aminoethylethanolamin, Ethanolamin, 3-Aminopropanol, Neopentanolamin. Zur Kettenterminierung werden üblicherweise Amine mit einer gegenüber Isocyanaten reaktiven Gruppe wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, beziehungsweise geeignete substituierte Derivate davon, Amidamine aus diprimären Aminen und Monocarbonsäuren, Monoketim von diprimären Ammen, primär/tertiäre Amine, wie N,N-Dimethylaminopropylamin, verwendet.

Die als Komponente B) eingesetzten Polyisocyanat-Prepolymere oder deren Mischungen können bevorzugt eine mittlere NCO-Funktionalität von 1,8 bis 5, besonders bevorzugt 2 bis 3,5 und ganz besonders bevorzugt 2 bis 2,5 aufweisen.

Die Komponente C) ist eine Verbindung mit mindestens zwei isocyanatreaktiven Hydroxygruppen. Beispielsweise kann Komponente C) ein Polyamin oder ein Polyol mit mindestens zwei isocyanatreaktiven Hydroxygruppen sein.

Als Komponente C) können hydroxyfunktionelle, insbesondere polymere, Polyole, beispielsweise Polyetherpolyole eingesetzt werden. Beispielsweise eignen sich Polytetramethylenglykolpolyether, wie sie durch Polymerisation von Tetrahydrofuran mittels kationischer Ringöffnung erhältlich sind. Ebenfalls geeignete Polyetherpolyole können die Additionsprodukte von Styroloxid, Ethylenoxid, Propylenoxid, Butylenoxid und/oder Epichlorhydrin an di- oder polyfunktionelle Startermoleküle sein. Als geeignete Startermoleküle können beispielsweise Wasser, Butyldiglykol, Glycerin, Diethylenglykol, Trimethyolpropan, Propylenglykol, Sorbit, Ethylendiamin, Triethanolamin, oder 1,4-Butandiol oder Mischungen davon eingesetzt werden.

Es ist bevorzugt, dass die Komponente C) ein Polymer mit 2 bis 4 Hydroxygruppen pro Molekül, ganz besonders bevorzugt ein Polypropylenglykol mit 2 bis 3 Hydroxygruppen pro Molekül ist. Erfmdungsgemäß bevorzugt haben die polymeren Polyole aus C) eine besonders enge Molekulargewichtsverteilung, das heißt eine Polydispersität (PD = Mw/Mn) von 1,0 bis 1,5 und/oder eine OH-Funktionalität von größer 1,9. Bevorzugt weisen die genannten Polyetherpolyole eine Polydispersität von 1,0 bis 1,5 und eine OH-Funktionalität von größer 1,9 auf, besonders bevorzugt größer oder gleich 1,95 auf.

Solche Polyetherpolyole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Diese Methode ist zum Beispiel in der Patentschrift US 5,158,922 und der Offenlegungsschrift EP 0 654 302 A1 beschrieben.

Die Reaktionsmischung für das Polyurethan kann durch Mischen der Komponenten A), B) und C) erhalten werden. Das Verhältnis von isocyanatreaktiven Hydroxygruppen zu freien Isocyanatgruppen ist dabei vorzugsweise von 1:1,5 bis 1,5:1 besonders bevorzugt von 1:1,02:bis 1:0,95.

Vorzugsweise besitzt zumindest eine der Komponenten A), B) oder C) eine Funktionalität von ≥ 2,0, bevorzugt von ≥2,5 bevorzugt von ≥3,0, um in das Polymerelement eine Verzweigung oder eine Vernetzung einzuführen. Der Begriff "Funktionalität" bezieht sich bei Komponente A) und B) auf die mittlere Anzahl von NCO-Gruppen pro Molekül und bei Komponente C) auf die mittlere Anzahl von OH-Gruppen pro Molekül. Diese Verzeigung beziehungsweise Vernetzung bewirkt bessere mechanische Eigenschaften und bessere elastomere Eigenschaften, insbesondere auch bessere Dehnungseigenschaften

Das Polyurethan kann vorteilhafterweise eine gute mechanische Festigkeit und hohe Elastizität aufweisen. Insbesondere kann das Polyurethan eine maximale Spannung von ≥0,2 MPa, insbesondere von 0,4 MPa bis 50 MPa, und eine maximale Dehnung von ≥250 %, insbesondere von ≥350 %, aufweisen. Darüber hinaus kann das Polyurethan im Gebrauchsdehnungsbereich von 50 % bis 200 % eine Spannung von 0,1 MPa bis 1 MPa, beispielsweise von 0,1 MPa bis 0,8MPa, insbesondere von 0,1 MPa bis 0,3 MPa, aufweisen (Bestimmung nach DIN 53504). Ferner kann das Polyurethan ein Elastizitätsmodul bei einer Dehnung von 100 % von 0,1 MPa bis 10 MPa, beispielsweise von 0,2 MPa bis 5 MPa, aufweisen (Bestimmung nach DIN EN 150 672 1-1).

Das Polyurethan kann weiterhin vorteilhafterweise gute elektrische Eigenschaften aufweisen; diese können für die Durchbruchsfeldstärke nach ASTM D 149 und für die Messungen der Dielektrizitätskonstante ASTM D 150 bestimmt werden.

Die Reaktionsmischung kann neben den Komponenten A), B) und C) zusätzlich auch Hilfs- und Zusatzstoffe enthalten. Beispiele für solche Hilfs- und Zusatzstoffe sind Vernetzer, Verdicker, Colösemittel, Thixotropiermittel, Stabilisatoren, Antioxidantien, Lichtschutzmittel, Emulgatoren, Tenside, Klebstoffe, Weichmacher, Hydrophobierungsmittel, Pigmente, Füllstoffe und Verlaufshilfsmittel.

Füllstoffe können beispielsweise die Dielektrizitätskonstante des Polymerelements regulieren. Vorzugsweise umfasst die Reaktionsmischung Füllstoffe zur Erhöhung der Dielektrizitätskonstanten wie Füllstoffe mit einer hohen Dielektrizitätskonstante. Beispiele hierfür sind keramische Füllstoffe, insbesondere Bariumtitanat, Titandioxid und piezoelektrische Keramiken wie Quarz oder Bleizirkoniumtitanat, sowie organische Füllstoffe, insbesondere solche mit einer hohen elektrischen Polarisierbarkeit, beispielsweise Phthalocyanine.

Außerdem ist eine hohe Dielektrizitätskonstante auch durch das Einbringen elektrisch leitfähiger Füllstoffe unterhalb der Perkolationsschwelle erzielbar. Beispiele hierfür sind Ruß, Graphit, einwandige oder mehrwandige Kohlenstoff-Nanoröhrchen, elektrisch leitfähige Polymere wie Polythiophene, Polyaniline oder Polypyrrole, oder Mischungen davon. In diesem Zusammenhang sind insbesondere solche Rußtypen von Interesse, die eine Oberflächenpassivierung aufweisen und deshalb bei niedrigen Konzentrationen unterhalb der Perkolationsschwelle zwar die Dielektrizitätskonstante erhöhen und trotzdem nicht zu einer Erhöhung der Leitfähigkeit des Polymers führen.

Angemerkt sei, dass die Begriffe "ein" und "eine" im Zusammenhang mit der vorliegenden Erfindung und insbesondere mit den Komponenten A), B) und C) nicht als Zahlwörter, sondern als unbestimmter Artikel verwendet werden, sofern der Kontext nicht eindeutig eine andere Aussage ergibt.

Bevorzugte Gewichtsanteile in Bezug auf die fertige Reaktionsmischung aus A), B), C) und gegebenenfalls weiteren Anteilen sind:
1 bis 30 Gewichtsteile an A), bevorzugt 4 bis 20 Gewichtsteile
1 bis 50 Gewichtsteile an B), bevorzugt 25 bis 40 Gewichtsteile
10 bis 70 Gewichtsteile an C), bevorzugt 30 bis 65 Gewichtsteile, sowie gegebenenfalls
0 bis 50 Gewichtsteile an weiteren Hilfs- und Zusatzstoffe beziehungsweise Additiven, bevorzugt
0 bis 20 Gewichtsteile. Die oben stehenden Anteile sind dabei jeweils so zu bemessen, dass die Summe aller Gewichtsteile 100 ergibt.

In einer weiteren Ausführungsform des erfindungsgemäßen Schichtenverbundes liegt dieser in Form einer dehnbaren Elektrode vor. Insbesondere kann die Trägerschicht ein Elastomer sein. Auf diese Weise lassen sich Elektroden konstruieren, die unter zyklischer Ausdehnung und Kontraktion ihre Funktion nicht verlieren.

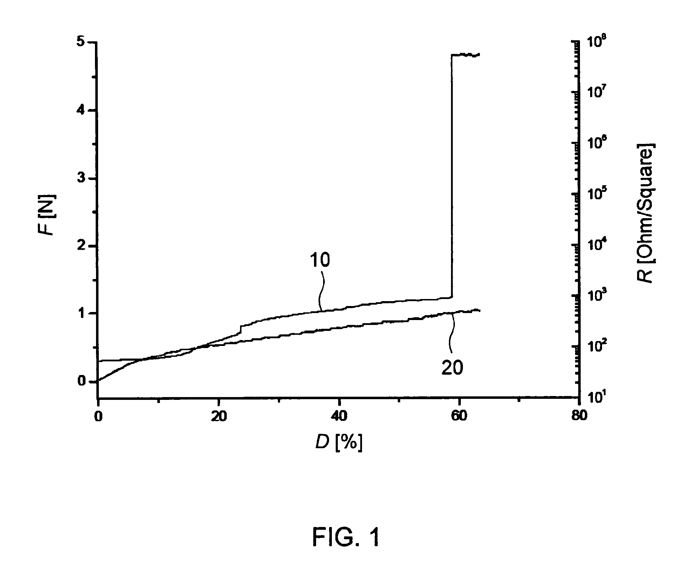

Die Erfindung wird anhand des nachfolgenden Beispiels in Verbindung mit der Figur weiter erläutert. Hierbei zeigt FIG. 1 ein Kraft-Deformations-Diagramm des in dem Beispiel erhaltenen Materials auf einem elastomeren Polyurethan-Substrat, wobei zusätzlich der Oberflächenwiderstand der Probe aufgezeichnet wurde.

### Beispiel:

In einem Rundkolben wurden 0,30 mmol (0,021 g) Imidazol zu 2,19 mmol (1,25 g) Eisen(III)-p-toluolsulfonat (Fe(OTs)₃; 40% in n-Butanol) gegeben. Die Mischung wurde bei Raumtemperatur (20 bis 25 °C) für 10 Minuten gerührt, bis das Imidazol vollständig gelöst war. Anschließend wurden bei Raumtemperatur 1,25 mmol (0,18 g) Ethylendioxythiophen (EDOT) und 0,12 mmol (0,48 g) des Polyols ACCLAIM® 4200N (lineares Polyetherpolyol auf der Basis von Propylenoxid, Molekülmasse ca. 4000 g/mol, OH-Zahl ca. 26,5 bis 29,5 mg KOH/g, ex Bayer MaterialScience AG) hinzugefügt und es wurde für 10 Minuten gerührt, während die Temperatur auf Raumtemperatur gehalten wurde. Danach wurde das erhaltene Reaktionsgemisch auf ein unbehandeltes Polyurethansubstrat aufgesprüht. Das Aufsprühen erfolgte mittels einer Sprühpistole mit einer Düsenöffnung von 0,3 mm Man ließ das Lösungsmittel n-Butanol aus der Beschichtung für 5 Minuten bei Raumtemperatur verdampfen. Anschließend wurde das beschichtete Polyurethan zum Aushärten in einem Ofen bei 80 °C gelagert. Um nicht reagiertes Monomer und überschüssiges Eisensalz zu entfernen, wurde die ausgehärtete Probe mit Ethanol behandelt. Schließlich wurde der erhaltene Film mit Druckluft getrocknet.

Proben des in dem Beispiel erhaltenen Materials wurden in unterschiedlicher Schichtdicke mittels Vierpunktmessung auf ihre elektrischen Eigenschaften hin untersucht. Zum Vergleich diente eine PEDOT-Probe auf einem Glassubstrat. Die Ergebnisse sind in der nachfolgenden Tabelle zusammengefasst. Der Oberflächenwiderstand wird in Ohm/Square, der spezifische Widerstand in Ohm cm und die spezifische Leitfähigkeit in S/cm angegeben.

| Probe | Ohm/Square | Schichtdicke [µm] | Länge [cm] | Breite [cm] | Ohm cm | S/cm |
|---|---|---|---|---|---|---|
| 1 | 35 | 1,40 | 6 | 1 | 0,00490 | 204,08 |
| 2 | 19 | 2,06 | 6 | 1 | 0,00391 | 255,49 |
| 3 | 18 | 1,99 | 6 | 1 | 0,00359 | 278,75 |
| PEDOT (Vergleich) | 240 | 0,280 | 11,5 | 7,5 | 0,00672 | 148,81 |

Das in dem Beispiel erhaltene beschichtete Polyurethan-Elastomer wurde in einem Dehnungs-Versuch bei gleichzeitiger Messung des elektrischen Oberflächenwiderstands untersucht. Die Ergebnisse sind in FIG. 1 wiedergegeben. Hierbei zeigt Messkurve 10 den Verlauf des elektrischen Oberflächenwiderstands R und Messkurve 20 die Kraft F bei zunehmender Deformation D. Die Probe wurde mit einer Kraft von 0,1 N gedehnt. Man erkennt, dass ausgehend von einem Oberflächenwiderstandswert von etwa 70 Ohm/Square bei 0% Dehnung dieser Wert bis auf etwa 1000 Ohm/Square ansteigt, bis bei einer Dehnung von rund 60% ein Anstieg um 5 Größenordnungen zu verzeichnen ist. Dieses wird so interpretiert, dass bei dieser Dehnung der elektrisch leitfähige Film reißt und somit die Leitfähigkeit zusammenbricht.

## Patentansprüche

1. Verfahren zur Herstellung einer elektrisch leitfähigen Zusammensetzung, umfassend den Schritt der Polymerisation eines Thiophens der allgemeinen Formel (I) 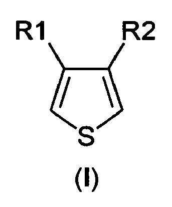 wobei gilt: R1 und R2 sind unabhängig voneinander Wasserstoff, Alkyl, Aryl, Alkoxy, Aryloxy oder aber R1 und R2 bilden gemeinsam eine unsubstituierte oder substituierte Alkylendioxy-Gruppe;
in Gegenwart eines polymeren Polyols und in Abwesenheit eine Polyisocyanats.

2. Verfahren gemäß Anspruch 1, wobei das molare Verhältnis von Thiophen (I) zu Polyol ≥5:1 1 bis ≤15:l beträgt.

3. Verfahren gemäß Anspruch 1, wobei die Polymerisation des Thiophens (I) in Gegenwart einer oxidierenden Lewis-Säure als Katalysator durchgeführt wird.

4. Verfahren gemäß Anspruch 1, wobei die Polymerisation des Thiophens (I) auf elektrochemischem Wege durchgeführt wird.

5. Verfahren gemäß Anspruch 1, wobei das Polyol ein Polyetherpolyol mit Propylenoxideinheiten ist.

6. Verfahren gemäß Anspruch 1, wobei die Polymerisation des Thiophens (I) zumindest teilweise auf einem Trägermaterial durchgeführt wird.

7. Elektrisch leitfähige Zusammensetzung, umfassend ein Polymer mit Einheiten der allgemeinen Formel (II), (III), (IV) und/oder (V) 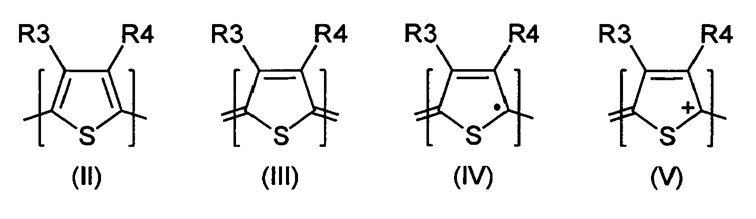 wobei gilt: R3 und R4 sind unabhängig voneinander Wasserstoff, Alkyl, Aryl, Hydroxyalkyl, Hydroxyalkyl, Alkoxy, Aryloxy oder aber R3 und R4 bilden gemeinsam eine unsubstituierte oder substituierte Alkylendioxy-Gruppe;
und ein polymeres Polyol sowie weiterhin nicht umfassend ein Polyisocyanat.

8. Zusammensetzung gemäß Anspruch 7, wobei das molare Verhältnis von Einheiten (II), (III), (IV) und/oder (V) zu Polyol ≥5:1 bis ≤15:1 beträgt.

9. Zusammensetzung gemäß Anspruch 7, wobei in den Einheiten (II), (III), (IV) und/oder (V) R3 und R4 gemeinsam eine Ethylendioxy-Gruppe bilden.

10. Zusammensetzung gemäß Anspruch 7, wobei das Polyol ein Polyetherpolyol mit Propylenoxideinheiten ist.

11. Zusammensetzung gemäß Anspruch 7 mit einem Oberflächenwiderstand von ≥10 Ohm/Square bis ≤50 Ohm/Square.

12. Zusammensetzung gemäß Anspruch 7 mit einer spezifischen Leitfähigkeit von ≥180 S/cm bis ≤300 S/cm.

13. Schichtenverbund, umfassend eine Trägerschicht und eine hierauf angeordnete Schicht umfassend eine Zusammensetzung gemäß Anspruch 7.

14. Schichtenverbund gemäß Anspruch 13, wobei die Trägerschicht Polyurethan umfasst.

15. Schichtenverbund gemäß Anspruch 13 in Form einer dehnbaren Elektrode.
